# EUROPEAN PATENT SPECIFICATION

(11) **EP 2 439 867 B1**
(45) Date of publication and mention of the grant of the patent: **06.08.2014**
(21) Application number: 10306086.9
(22) Date of filing: 05.10.2010
(51) Int. Cl.: H04L 1/06, H04L 1/00

(54) **Method for generating feedback for MIMO operation in a radio communication network, corresponding receiver and transmitter**
Verfahren zur Feedback-Erzeugung für MIMO-Betrieb in einem Funkkommunikationsnetzwerk, entsprechender Empfänger und Sender
Procédé pour générer un retour d'informations pour une opération MIMO dans un réseau de communication radio, récepteur et émetteur correspondants

(43) Date of publication of application: 11.04.2012
(73) Proprietor: Alcatel Lucent, 75007 Paris (FR)
(72) Inventor: Boccardi, Federico, Cernusco sul Naviglio (Mi) 200063 (IT); Baker, Matthew, Canterbury, Kent, CT2 9DB (GB)
(74) Representative: Wetzel, Emmanuelle

(56) References cited:
- WO-A1-2009/002087
- WO-A2-2008/156319
- US-A1- 2008 305 745
- US-A1- 2010 041 344

## Description

### BACKGROUND OF THE INVENTION

The present invention relates to a method for generating feedback to be used for downlink MIMO operation in a wireless/mobile radio communication.

MIMO (Multiple Input Multiple Output) is a technology for use in wireless/mobile communication network in order to increase the data throughput transmitted over the air interface without additional bandwidth or transmit power. MIMO consists in using multiple antennas at the transmitter and/or receiver to improve communication performance. It improvement is achieved by higher spectral efficiency (more bits per second per hertz of bandwidth) and link reliability or diversity (reduced fading).

MIMO technology is for example adapted to be used in wireless communication standards such as IEEE 802.11 n (Wifi), HSPA, 3GPP Long Term Evolution, IEEE 802.16m, WIMAX...

Among other things, in MIMO operation, the transmitter must determine how many simultaneous streams, (SU-MIMO (single user MIMO) for only 1 stream or MU- MIMO (Multi user MIMO) for at least 2 simultaneous streams) it can generate, with these simultaneous streams being likely to be received properly at the one or multiple receiver(s). The number of simultaneous streams varies for example on the SNR between the transmitter and the receiver(s). If the SNR is high, more streams can typically be supported simultaneously than if the SNR is low.

Furthermore, in MIMO operation the transmitter usually applies precoding to the signals sent over the multiple antennas. Precoding comprises all spatial processing that occurs at multiple transmit antennas. It consists in applying appropriate phase and/or gain or weighting to the signals emitted by the transmit antennas to maximize the signal quality at the receiver(s) by making signals belonging to the same signal stream and emitted from different antennas add up constructively, and reduce the multipath fading effect.

For the transmitter to be able to efficiently operate in MIMO mode, an efficient feedback mechanism is required from the receiver(s) to the transmitter. Only this way the transmitter is able to optimize and adapt the parameters used for transmission over the multiple antenna system.

The feedback parameters reported by the receiver usually comprise:
- an estimation of the preferred number of simultaneous streams the receiver can deal with (called transmission rank),
- an estimation of the value of precoding parameters or precoding matrix (called PMI) which applied to the different parts of the signal sent out by the different transmit antennas would give the best results while decoding the MIMO signal,
- an estimation of the channel quality (called CQI) which would result from the use of the precoding parameters and of the reported number of simultaneous streams.

Patent application WO2009/002087 discloses a way for sending back CQI information in that full CQI information are transmitted at a predefined time interval, while a differential value of the CQI is transmitted between two full CQI information.

Especially it is advantageous that several scenario with different triplets (tr. rank, PMI, CQI) are fed back from the receiver to the transmitter so that the transmitter can get a complete picture of the multiple receiver situation and choose the best configuration for the whole system.

The amount of feedback that needs to be generated for optimal MIMO operation is however a challenge since it is so high that it would impair the bandwidth for user data transmission which needs to co-exist on the feedback path.

To cope with that a lot of work has been done to try to reduce the amount of feedback while keeping sufficient reliable information for good MIMO operation.

A way of reducing the feedback as known from 3GPP LTE Release 8, is based on the precoding codebook having the so called 'nested' property. The nested property is a method of arranging the codebooks of different transmission ranks so that the lower transmission rank codebooks are comprised of a subset of the higher transmission rank codebook precoding vectors. This property simplifies the CQI calculation across different transmission ranks and it allows a receiver to calculate multiple CQls reports for the same PMI report. For example, to the same transmission rank-2 PMI, we can associate two CQls: one targeting transmission rank-2 transmission and the other targeting transmission rank-1 transmission obtained by using a subset of the precoding matrix reported as PMI. This way the necessary parameters for transmission rank 2 and transmission rank 1 can be retrieved only by sending feedback on transmission rank 2.

In MIMO implementations where, the nested property of codebook plays a secondary role due for example to the introduction of receiver- specific reference signals, an increase in the amount of feedback would be necessary since for all transmission ranks a corresponding PMI report would need to take place. Indeed, it would no more be possible to deduce two different CQls to the same PMI report for two different transmission ranks.

A particular object of the present invention is to provide for an efficient feedback mechanism from the receiver to the transmitter especially when the nested property is absent and the receiver would want to send feedback on at least a preferred scenario and a fall back scenario for MIMO operation.

Another object of the invention is to provide corresponding network equipment and user equipment adapted to support the feedback mechanism.

### SUMMARY OF THE INVENTION

These objects, and others that appear below, are achieved by a method for generating feedback information in a multiple input multiple output communication system according to claim 1, a receiver according to claim 6 and transmitter according to claim 7.

The method according to the present invention presents the advantage to extend the useful information comprised in the feedback information while not increasing the size of the feedback information.

Another advantage of the present invention consists in providing several alternatives to the transmitter which can have more flexibility in selecting the MIMO configuration to use.

Another advantage of the present invention consists in reducing the size of the feedback information for a given amount of useful information in the feedback.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a communication system with a transmitter and receivers using MIMO transmission;
- Figure 2 shows possible feedback formats according to the present invention;
- Figure 3 shows a receiver according to the invention;
- Figure 4 shows a transmitter according to the present invention.

### DETAILED DESCRIPTION OF THE INVENTION

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any boxes shown in the Figures are conceptual only. Their function may be carried out through the operation of program logic, through dedicated logic, through the interaction of program control and dedicated logic, or even manually, the particular technique being selectable by the implementer as more specifically understood from the context.

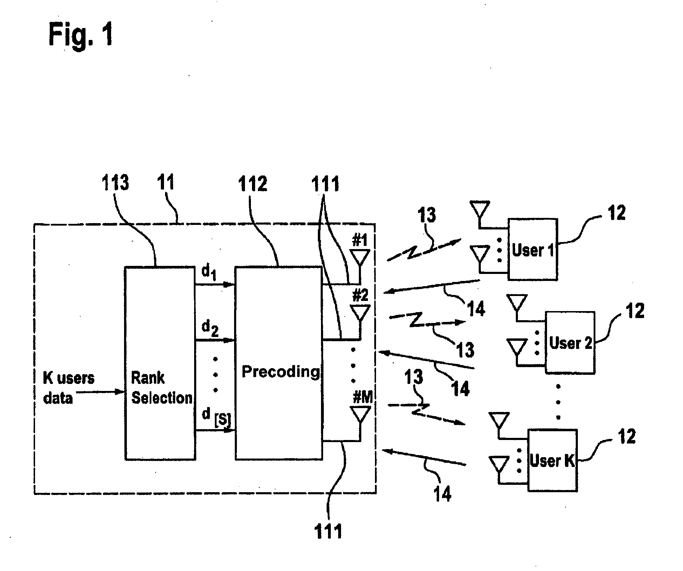

Figure 1 shows a communication system with a transmitter 11 and receivers 12 using MIMO transmission. Transmitter 11 comprises a multiple antenna system with M antennas 111, a precoding module 112 and a user selection module 113. Receivers 12 comprise either a multiple antenna system as shown on picture 1 or single antenna. MIMO signal 13 is sent out by transmitter 11 to receivers 12 while receivers 12 send feedback information 14 back to transmitter 11. The feedback information 14 is used by transmitter 11 to better configure the transmission rank selection module 113 as well as the precoding module 112. It will be understood that both transmitters and receivers are actually transceivers able to receive and transmit data. The term transmitter and receiver is however chosen to illustrate from which entity and to which entity the user data transmitted using MIMO operation are transmitted. It will be clear for a person skilled in the art that in case of full duplex transmission, the transmitter and the receiver change their role depending on the direction of transmission and that both are equipped with a full transmitter and a full receiver module.

More precisely, transmission rank selection module 113 at transmitter 11 is adapted to select how many signals can be sent simultaneously using MIMO transmission. In Single-User MIMO (SU-MIMO) transmission the signals are sent to one user, whereas in Multi-User MIMO (MU-MIMO) transmission the transmission rank corresponds to the number of users simultaneously sent a signal by the different antennas. Once the transmission rank is determined, the precoding module 112 needs to select the appropriate precoding weights which need to be applied to the signals destined to the selected users. A specific phase and typically also a specific gain is calculated and applied to the different signals at the precoding module 112. The signal is then splitted and/or distributed and sent over the multiple antenna system 111 according to known MIMO methods.

Feedback information 14 univocally represents a preferred transmission rank, a preferred precoding matrix (PMI) and a preferred channel quality (CQI). as seen from the receiver perspective sending this information. Either an indication of the 3 parameters is contained in the feedback message or one or more of the parameters may be deduced by the transmitter thanks to common rules agreed at the transmitter and at the receiver.

The transmitter 11 receives from all receivers 12 involved in the MIMO transmission such feedback information. It is consequently the task of the transceiver to compile all the feedback and select the most appropriate configuration for performing efficient MIMO transmission towards the receivers.

Since the triplet (transmission rank, PMI, CQI) associated to one receiver might conflict with the triplet (transmission rank, PMI, CQI) associated to another receiver, the transmitter has to make a trade off. However, making this trade off and selecting the feedback sent by a first receiver while ignoring feedback sent by a second transmitter may cause a low efficiency of the MIMO transmission especially toward the second receiver. Indeed, the parameters that the transmitter would force for transmission to the second receiver (from which it has ignored the feedback) may lead to bad reception at the receiver and consequently poor MIMO transmission.

A solution consists in sending not only one single feedback information from each receiver to the transmitter but a plurality of feedback information so that the transmitter is made aware of several alternative combinations of transmission rank, PMI, CQI seen from each receiver and so that the transmitter can make its MIMO transmission choice with this knowledge. Unfortunately, increasing highly the amount of feedback results in overloading the air interface in the feedback direction and causing less user information to be sent in this transmission direction.

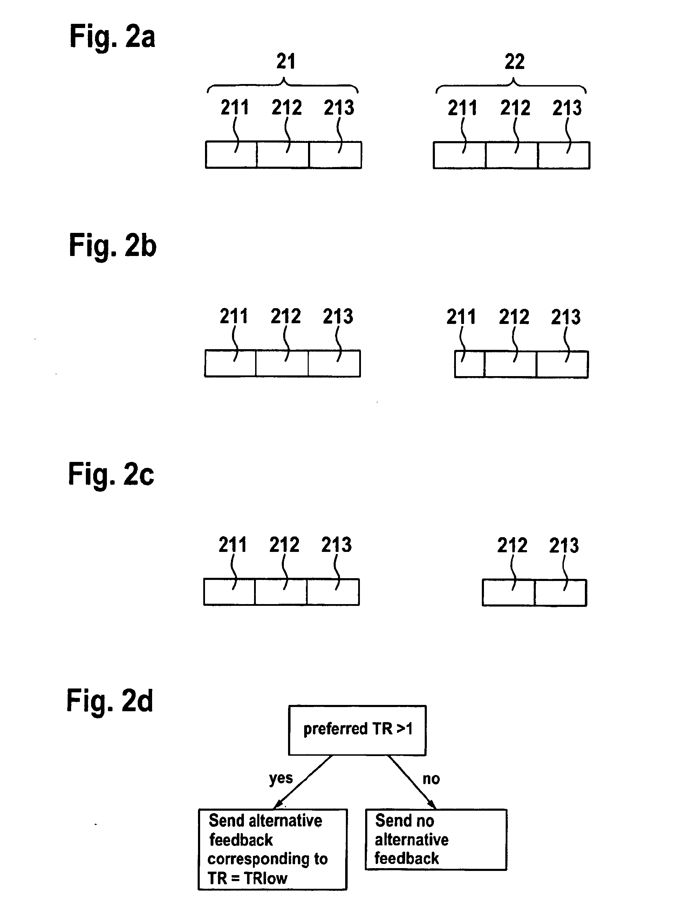

Consequently, a solution would consist in reporting only 2 feedback information relating to two alternative triplets (transmission rank, PMI, CQI), the preferred triplet and an alternative triplet as shown on figure 2a.

Field 211 contains the transmission rank (TR), field 212 the precoding (PMI), field 213 the channel coding (CQI). The number of bits occupied by these fields depends on the granularity of the values associated to these parameters. Typically, if transmitter has a multiple antenna system with 8 antenna element, the transmission rank reaches from 1 to 8 representing a 3bit field. PMI field may be another 4 bits and CQI fields 4 bits. The first 21 and the second 22 feedback triplet are identical in number of transmitted bits. The size of the transmission rank fields, PMI and CQI fileds however varies depending on the MIMO configuration so that the given figures are only exemplary. This solution is illustrated on figure 2a.

According to the invention, it is the goal of the invention to further reduce the number of bits needed for feedback without reducing the amount of useful feedback information available at the transmitter for decision on the MIMO transmission parameters.

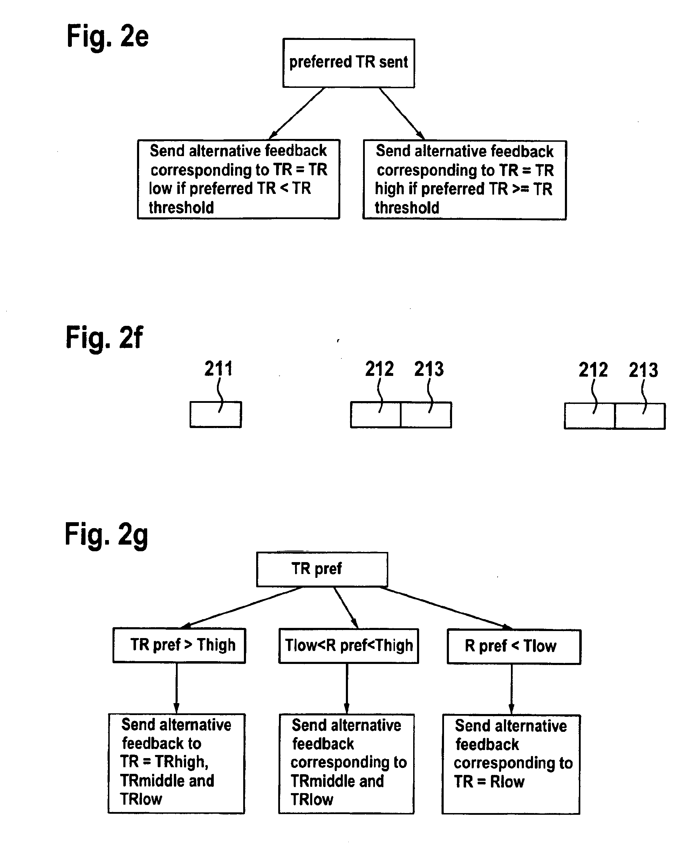

Figure 2 shows possible feedback formats according to the present invention.

In a first embodiment of the present invention illustrated in figure 2b, the size of the preferred feedback 21 is kept identical as in the previously described solution. For the alternative feedback 22, however, the size of the field related to the transmission rank is reduced compared to the size of the transmission rank field in the preferred feedback. This can be obtained because the alternative feedback would only give information for lower transmission rank values (transmission rank 1 to 4 which can be coded on 2 bit instead of 3 or transmission rank 1 to 2 which can be coded on 1 bit).

In a second embodiment of the present invention illustrated in figure 2c, the field related to the transmission rank may be completely omitted. In this case, the transmission rank for the alternative feedback may be known by both transmitter and receiver as being a default value TRlow for example 1. If the preferred feedback contained already transmission rank 1, then no default feedback needs to be transmitted. This is showed on figure 2d.

Alternatively, the transmission rank in the alternative feedback may also be absent and both receiver and transmitter may have agreed on a common way to determine it. For example, the transmission rank of the alternative feedback may depend on the transmission rank of the preferred feedback and on a transmission rank threshold, then the transmission rank can be deduced automatically by the transmitter. For example, if the transmission rank in the preferred feedback is higher than a transmission rank threshold (for example 4), then the transmission rank in the default feedback must be assumed by the transmitter to be a predefined TRhigh (for example 2) , on the contrary if the transmission threshold in the preferred feedback is lower than the transmission feedback threshold, then the transmission rank in the default feedback must be assumed by the transmitter to be a predefined TRlow ( for example 1). This is shown on figure 2e.

In a further embodiment of the present invention, the size of the preferred feedback may be reduced compared to the standard size, while enabling additional alternative feedback as shown in figure 2f.

In such a case, the preferred feedback might contain a limited number of bits compared to the standard feedback if the corresponding transmission rank is above or equal to a predefined threshold. According to this embodiment, the size of the preferred feedback determines the number of alternative feedback that are sent by the receiver.

As shown on figure 2g, if the transmission rank associated with the preferred feedback is higher than a first threshold Thigh, then 3 successive alternative feedbacks are sent by the receiver corresponding to transmission ranks TR high, TRmiddle and TR low. If the transmission rank associated with the preferred feedback is between Thigh and a lower threshold Tlow, then 2 successive alternative feedbacks are sent by the receiver corresponding to transmission ranks TRmiddle and TRlow. If the transmission rank associated with the preferred feedback is lower than Tlow, then a single alternative feedback is sent by the receiver corresponding to transmission ranks TRlow.

It will be understood by a person skilled in the art, that this is only an example of the way of modulating the number of alternative feedback depending on the preferred feedback while ensuring that the total size of the feedback is kept lower than the sum of two standard feedbacks.

The following gives a concrete example where there are less feedback bits used for higher rank transmissions of PMI, and therefore if the total number of feedback bits is constant regardless of rank then there may be more bits available at low transmission rank. In LTE Release 10, the PMI may be comprised of two components denoted here "W1" and "W2". As a matter of fact, the number of bits used for respectively the PMI components "W1" and "W2" in LTE Release 10 are:
W1: 4,4,2,2,2,2,2,0
W2: 4,4,4,3,0,0,0,0
for transmission ranks 1 to 8 respectively.

A new report is defined such that for high transmission rank, multiple additional CQI/PMls are sent back. For a lower transmission rank, only one alternative is sent back,

For example:
- preferred transmission rank=8: alternative transmission ranks=4,2
- preferred transmission rank=4: alternative transmission ranks=2

In any of the above embodiments, the first CQI/PMI may typically be derived according to SU-MIMO assumptions, while the additional CQI/PMIs may typically be derived according to MU-MIMO assumptions. Such assumptions typically differ in regard to the assumed intra-cell interference.

In still a further embodiment of the present invention, the alternative feedback comprises an indicator of an alternative precoding, a predefined number of values of the indicator is relating to a first alternative transmission rank and another predefined number of values of the indicator is relating to a second alternative transmission rank.

More concretely, if the transmission rank is 2 for a CQI/PMI, the CQI may actually comprise two CQI values, one for a first codeword and a second for a second codeword, and one of the CQI values may be encoded differentially with respect to the other.

Therefore, the transmission rank of an additional CQI/PMI may be jointly encoded with the CQI values. For example, 4 bits are used to signal an absolute CQI value and 3 bits are used to signal a differential CQI value corresponding to a second codeword, giving a total of 128 combinations. In the embodiment of the invention, for example 112 combinations might be available for transmission rank 2 feedback and 16 for transmission rank 1 feedback, thus having little impact on the possible combinations for the transmission rank 2 case while still allowing the full 2⁴ absolute CQI values to be signalled in case of transmission rank 1 feedback, as well as indicating to the transmitter whether the feedback corresponds to transmission rank 1 or transmission rank 2, while keeping the total size of the message the same regardless of the transmission rank.

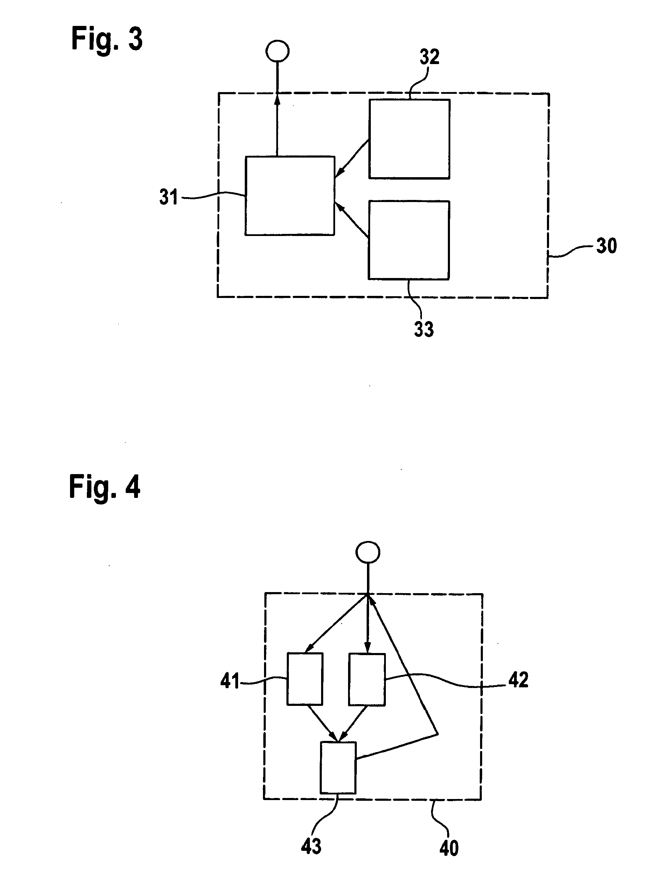

Figure 3 shows a receiver according to the invention. The receiver 30 is adapted to be used in a mobile or wireless radio communication system. The receiver is further adapted to communicate with a transmitter equipped with a multiple antenna system. The receiver may for example be a base station or a user equipment.

As previously mentioned the term receiver refers to the function of the apparatus while receiving user data. It will be understood that the receiver has also transmission capability to send feedback out. By extension, the receiver may be a full transceiver able to send and receiver user data and feedback information in both directions.

The receiver comprises means 31 for calculating a preferred feedback indication to be used by the transmitter when it communicates with the receiver. The preferred feedback indication univocally determines a transmission rank, a precoding and a channel quality indicator which seen from the receiver perspective would be the preferred parameters for MIMO communication.

The receiver further comprises means 32 for generating at least an alternative feedback indication representing an alternative transmission rank, precoding and channel quality indicator which would be acceptable from the perspective of the receiver. According to the present invention, the size of the preferred feedback plus the size of the alternative feedback indication is smaller than two times the number of bits necessary for representing the transmission rank, the precoding and the coding scheme.

The receiver comprises means 33 for sending on the feedback channel the preferred and alternative feedback indications.

Figure 4 shows a transmitter according to the present invention.

As previously mentioned the term transmitter refers to the function of the apparatus while sending user data using MIMO operation. It will be understood that the transmitter has also reception capability to receive feedback. By extension, the transmitter may be a full transceiver able to send and receiver user data and feedback information in both directions.

The transmitter 40 is adapted to be used in a mobile or wireless radio communication system. The transmitter is equipped with a multiple antenna system and adapted to communicate with a receiver. The transmitter may for example be a base station or a user equipment.

The transmitter comprises means 41 for receiving a preferred feedback indication to be used by the transmitter when it communicates with the receiver. The preferred feedback indication univocally determines a transmission rank, a precoding and a channel quality indicator which, seen from the receiver, perspective would be the preferred parameters for MIMO communication.

The transmitter further comprises means 42 for receiving at least an alternative feedback indication representing an alternative transmission rank, precoding and channel quality indicator which would be acceptable from the perspective of the receiver. According to the present invention, the size of the preferred feedback plus the size of the alternative feedback indication is smaller than two times the number of bits necessary for representing the transmission rank, the precoding and the coding scheme.

The transmitter further comprises means 43 for selecting MIMO transmission parameters based on received feedback from different receiver.

MIMO has also been investigated for optical based system so that it should be clear for person skilled in the art that the present invention may not be restrictively used in wireless/mobile radio communication systems but possibly also in optical communication system.

## Claims

1. Method for generating feedback information (14) for multiple input multiple output operation in a radio communication network, said radio communication network comprising at least one transmitter (11) and at least one receiver (12), said receiver (12) generating feedback information (14) for said transmitter (11), said method comprising the steps of: sending from said receiver (12) to said transmitter (11) a first feedback indication (21) having a predefined format, wherein said first feedback indication is a preferred feedback indication (21) representing an option preferred by the receiver, said first feedback indication univocally representing a preferred precoding PMI being a spatial processing consisting in applying phase and/or gain or weightings to the signal emitted by the transmit antennas, a preferred coding scheme CQI, and at least one transmission rank representing how many signals can be sent simultaneously using MIMO transmission; said method further comprising the step of: sending from said receiver at least a second feedback indication (22), wherein said second feedback indication (22) represents an alternative option for the receiver with respect to said preferred feedback indication (21), said second feedback indication (22) comprising at least an indicator of an alternative preferred coding scheme CQI, wherein the size of the first feedback indication plus the size of the second feedback indication is smaller than two times the number of bits necessary for representing said precoding, said coding scheme and said transmission rank, the method **characterised by** the second feedback indication (22) that comprises an indicator of an alternative precoding, a predefined number of values of said indicator relating to a first alternative transmission rank (TRmiddle) and another predefined number of values of said indicator relating to a second alternative transmission rank (TRlow).

2. Method according to claim 1, wherein said second feedback indication does not comprise a transmission rank, the transmission rank related to said alternative option being derived from the transmission rank in said first indication.

3. Method according to claim 1, wherein said second feedback indication does not comprise a transmission rank, the transmission rank being related to said alternative option is derived from the transmission rank in said first indication and from a threshold.

4. Method according to claim 1, wherein the number of alternative options is derived from the transmission rank in said first indication.

5. Method according to claim 1, wherein the transmission rank related to said second indication is lower than the transmission rank in said first indication.

6. Receiver (30) adapted to perform multiple input multiple output operation in a radio communication network, said receiver (30) generating feedback information for a transmitter (40), said receiver (30) comprising: means (31) for sending a first indication having a predefined format, wherein said first indication is a preferred feedback indication (21) representing an option preferred by the receiver, said first indication comprising an indicator of a preferred precoding PMI being a spatial processing consisting in applying phase and/or gain or weightings to the signal emitted by the transmit antennas, an indicator of a preferred coding scheme CQI, and at least one indicator corresponding to a transmission rank representing how many signals can be sent simultaneously using MIMO transmission; -wherein said receiver further comprises: means (32) for sending at least a second feedback indication, wherein said second feedback indication (22) represents an alternative option for the receiver with respect to said preferred feedback indication (21), said second feedback indication (22) being shorter than said first indication, said second indication comprising at least an indicator of an alternative preferred coding scheme CQI, the receiver **characterised in that** the second feedback indication (22) comprises an indicator of an alternative precoding, a predefined number of values of said indicator relating to a first alternative transmission rank (TRmiddle) and another predefined number of values of said indicator relating to a second alternative transmission rank (TRlow).

7. Transmitter (40) adapted to perform multiple input multiple output operation in a radio communication network, said transmitter (40) comprising: means (41) for receiving a first indication having a predefined format, wherein said first indication is a preferred feedback indication (21) representing an option preferred by the receiver, said first indication comprising an indicator of a preferred precoding PMI being a spatial processing consisting in applying phase and/or gain or weightings to the signal emitted by the transmit antennas, an indicator of a preferred coding scheme CQI, and at least one indicator corresponding to a transmission rank representing how many signals can be sent simultaneously using MIMO transmission; -said transmitter further comprising: means (42) for receiving at least a second feedback indication, wherein said second feedback indication (22) represents an alternative option for the receiver with respect to said preferred feedback indication (21), said second feedback indication (22) being shorter than said first indication, said second indication comprising at least an indicator of an alternative preferred coding scheme CQI, the transmitter **characterised in that** the second feedback indication (22) comprises an indicator of an alternative precoding, a predefined number of values of said indicator relating to a first alternative transmission rank (TRmiddle) and another predefined number of values of said indicator relating to a second alternative transmission rank (TRlow).

## Patentansprüche

1. Verfahren zur Erzeugung von Rückkopplungsinformationen (14) für den Multiple Input-Multiple Output-Betrieb in einem Funkkommunikationsnetzwerk, wobei das besagte Funkkommunikationsnetzwerk mindestens einen Sender (11) und mindestens einen Empfänger (12) umfasst, wobei der besagte Empfänger (12) Rückkopplungsinformationen (14) für den besagten Sender (11) erzeugt, wobei das besagte Verfahren die folgenden Schritte umfasst: Senden einer ersten Rückkopplungsangabe (21) mit einem vordefinierten Format von dem besagten Empfänger (12) an den besagten Sender (11), wobei die besagte erste Rückkopplungsangabe eine bevorzugte Rückkopplungsangabe (21), welche eine vom Empfänger bevorzugte Option darstellt, ist, wobei die besagte erste Rückkopplungsangabe eindeutig eine bevorzugte Vorcodierung PMI, welche eine räumliche Verarbeitung ist, die in der Anwendung von Phase und/oder Verstärkung oder Gewichtungen auf das von den Sendeantennen ausgegebene Signal besteht, ein bevorzugtes Codierschema CQI und mindestens einen Übertragungsrang, welcher darstellt, wie viele Signale simultan unter Verwendung der MIMO-Übertragung gesendet werden können, darstellt; wobei das besagte Verfahren weiterhin den folgenden Schritt umfasst: Senden mindestens einer zweiten Rückkopplungsangabe (22) von dem besagten Empfänger, wobei die besagte zweite Rückkopplungsangabe (22) eine alternative Option für den Empfänger in Bezug auf die besagte bevorzugte Rückkopplungsangabe (21) darstellt, wobei die besagte zweite Rückkopplungsangabe (22) zumindest einen Indikator für ein alternatives bevorzugtes Codierschema CQI umfasst, wobei die Größe der ersten Rückkopplungsangabe plus die Größe der zweiten Rückkopplungsangabe kleiner als die zweifache die Anzahl der für die Darstellung der besagten Vorcodierung erforderlichen Bits, des besagten Codierschemas und des besagten Übertragungsrangs ist, wobei das Verfahren **gekennzeichnet ist durch** die zweite Rückkopplungsangabe (22), welche einen Indikator für eine alternative Vorcodierung, eine vordefinierte Anzahl von Werten des besagten Indikators, welche sich auf einen ersten alternativen Übertragungsrang (TRmiddle) beziehen, und eine andere vordefinierte Anzahl von Werten des besagten Indikators, welche sich auf einen zweiten alternativen Übertragungsrang (TRlow) beziehen, umfasst.

2. Verfahren nach Anspruch 1, wobei die besagte zweite Rückkopplungsangabe keinen Übertragungsrang umfasst, wobei der auf die besagte alternative Option bezogene Übertragungsrang von dem in der besagten ersten Angabe enthaltenen Übertragungsrang abgeleitet wird.

3. Verfahren nach Anspruch 1, wobei die besagte zweite Rückkopplungsangabe keinen Übertragungsrang umfasst, wobei der auf die besagte alternative Option bezogene Übertragungsrang von dem in der besagten ersten Angabe enthaltenen Übertragungsrang und von einem Grenzwert abgeleitet wird.

4. Verfahren nach Anspruch 1, wobei die Anzahl von alternativen Optionen von dem in der besagten ersten Angabe enthaltenen Übertragungsrang abgeleitet wird.

5. Verfahren nach Anspruch 1, wobei der auf die besagte zweite Angabe bezogene Übertragungsrang niedriger ist als der in der ersten Angabe enthaltene Übertragungsrang.

6. Empfänger (30), ausgelegt für das Durchführen des Multiple Input-Multiple Output-Betriebs in einem Funkkommunikationsnetzwerk, wobei der besagte Empfänger (30) Rückkopplungsinformationen für einen Sender (40) erzeugt, wobei der besagte Empfänger (30) Mittel (31) zum Senden einer ersten Angabe mit einem vordefinierten Format umfasst, wobei die besagte erste Angabe eine bevorzugte Rückkopplungsangabe (21) ist, welche eine vom Empfänger bevorzugte Option darstellt, wobei die besagte erste Angabe einen Indikator für eine bevorzugte Vorcodierung PMI, welche eine räumliche Verarbeitung ist, die in der Anwendung von Phase und/oder Verstärkung oder Gewichtungen auf das von den Sendeantennen ausgegebene Signal besteht, einen Indikator für ein bevorzugtes Codierschema CQI und mindestens einen Indikator, welcher einem Übertragungsrang, der darstellt, wie viele Signale simultan unter Verwendung der MIMO-Übertragung gesendet werden können, entspricht, umfasst; wobei der besagte Empfänger weiterhin umfasst: Mittel (32) zum Senden mindestens einer zweiten Rückkopplungsangabe, wobei die besagte zweite Rückkopplungsangabe (22) eine alternative Option für den Empfänger in Bezug auf die besagte bevorzugte Rückkopplungsangabe (21) darstellt, wobei die besagte zweite Rückkopplungsangabe (22) kürzer als die besagte erste Angabe ist, wobei die besagte zweite Angabe zumindest einen Indikator für ein alternatives bevorzugtes Codierschema CQI umfasst, wobei der Empfänger **dadurch gekennzeichnet ist, dass** die zweite Rückkopplungsangabe (22) einen Indikator für eine alternative Vorcodierung, eine vordefinierte Anzahl von Werten des besagten Indikators, welche sich auf einen ersten alternativen Übertragungsrang (TRmiddle) beziehen, und eine andere vordefinierte Anzahl von Werten des besagten Indikators, welche sich auf einen zweiten alternativen Übertragungsrang (TRlow) beziehen, umfasst.

7. Sender (40), ausgelegt für das Durchführen des Multiple Input-Multiple Output-Betriebs in einem Funkkommunikationsnetzwerk, wobei der besagte Sender (40) umfasst: Mittel (41) zum Empfangen einer ersten Angabe mit einem vordefinierten Format, wobei die besagte erste Angabe eine bevorzugte Rückkopplungsangabe (21) ist, welche eine vom Empfänger bevorzugte Option darstellt, wobei die besagte erste Angabe einen Indikator für eine bevorzugte Vorcodierung PMI, welche eine räumliche Verarbeitung ist, die in der Anwendung von Phase und/oder Verstärkung oder Gewichtungen auf das von den Sendeantennen ausgegebene Signal besteht, einen Indikator für ein bevorzugtes Codierschema CQI und mindestens einen Indikator, welcher einem Übertragungsrang, der darstellt, wie viele Signale simultan unter Verwendung der MIMO-Übertragung gesendet werden können, entspricht; wobei der besagte Sender weiterhin umfasst: Mittel (42) zum Empfangen mindestens einer zweiten Rückkopplungsangabe, wobei die besagte zweite Rückkopplungsangabe (22) eine alternative Option für den Empfänger in Bezug auf die besagte bevorzugte Rückkopplungsangabe (21) darstellt, wobei die besagte zweite Rückkopplungsangabe (22) kürzer als die besagte erste Angabe ist, wobei die besagte zweite Angabe zumindest einen Indikator für ein alternatives bevorzugtes Codierschema CQI umfasst, wobei der Sender **dadurch gekennzeichnet ist, dass** die zweite Rückkopplungsangabe (22) einen Indikator für eine alternative Vorcodierung, eine vordefinierte Anzahl von Werten des besagten Indikators, welche sich auf einen ersten alternativen Übertragungsrang (TRmiddle) beziehen, und eine andere vordefinierte Anzahl von Werten des besagten Indikators, welche sich auf einen zweiten alternativen Übertragungsrang (TRlow) beziehen, umfasst.

## Revendications

1. Procédé pour générer des informations de rétroaction (14) pour un fonctionnement entrées multiples sorties multiples dans un réseau de radiocommunication, ledit réseau de radiocommunication comprenant au moins un émetteur (11) et au moins un récepteur (12), ledit récepteur (12) générant des informations de rétroaction (14) pour ledit émetteur (11), ledit procédé comprenant les étapes suivantes : envoyer à partir dudit récepteur (12) audit émetteur (11) une première indication de rétroaction (21) ayant un format prédéfini, dans lequel ladite première indication de rétroaction est une indication de rétroaction préférée (21) représentant une option préférée par le récepteur, ladite première indication de rétroaction représentant de manière univoque un précodage PMI préféré qui est un traitement spatial consistant à appliquer une phase et/ou un gain ou des pondérations au signal émis par les antennes d'émission, un schéma de codage CQI préféré, et au moins un rang de transmission représentant le nombre de signaux pouvant être envoyés simultanément en utilisant une transmission MIMO ; ledit procédé comprenant en outre l'étape suivante : envoyer à partir dudit récepteur au moins une deuxième indication de rétroaction (22), dans lequel ladite deuxième indication de rétroaction (22) représente une option alternative pour le récepteur par rapport à ladite indication de rétroaction préférée (21), ladite deuxième indication de rétroaction (22) comprenant au moins un indicateur d'un schéma de codage CQI préféré alternatif, dans lequel la taille de la première indication de rétroaction plus la taille de la deuxième indication de rétroaction est inférieure à deux fois le nombre de bits nécessaire pour représenter ledit précodage, ledit schéma de codage et ledit rang de transmission, le procédé étant **caractérisé par** la deuxième indication de rétroaction (22) qui comprend un indicateur d'un précodage alternatif, un nombre prédéfini de valeurs dudit indicateur relatif à un premier rang de transmission alternatif (TRmiddle) et un autre nombre prédéfini de valeurs dudit indicateur relatif à un deuxième rang de transmission alternatif (TRlow).

2. Procédé selon la revendication 1, dans lequel ladite deuxième indication de rétroaction ne comprend pas un rang de transmission, le rang de transmission relatif à ladite option alternative étant dérivé du rang de transmission dans ladite première indication.

3. Procédé selon la revendication 1, dans lequel ladite deuxième indication de rétroaction ne comprend pas un rang de transmission, le rang de transmission relatif à ladite option alternative est dérivé du rang de transmission dans ladite première indication et d'un seuil.

4. Procédé selon la revendication 1, dans lequel le nombre d'options alternatives est dérivé du rang de transmission dans ladite première indication.

5. Procédé selon la revendication 1, dans lequel le rang de transmission relatif à ladite deuxième indication est inférieur au rang de transmission dans ladite première indication.

6. Récepteur (30) adapté pour exécuter un fonctionnement entrées multiples sorties multiples dans un réseau de radiocommunication, ledit récepteur (30) générant des informations de rétroaction pour un émetteur (40), ledit récepteur (30) comprenant : des moyens (31) pour envoyer une première indication ayant un format prédéfini, dans lequel ladite première indication est une indication de rétroaction préférée (21) représentant une option préférée par le récepteur, ladite première indication comprenant un indicateur d'un précodage PMI préféré qui est un traitement spatial consistant à appliquer une phase et/ou un gain ou des pondérations au signal émis par les antennes d'émission, un indicateur d'un schéma de codage CQI préféré, et au moins un indicateur correspondant à un rang de transmission représentant le nombre de signaux pouvant être envoyés simultanément en utilisant une transmission MIMO ;
- dans lequel ledit récepteur comprend en outre : des moyens (32) pour envoyer au moins une deuxième indication de rétroaction, dans lequel ladite deuxième indication de rétroaction (22) représente une option alternative pour le récepteur par rapport à ladite indication de rétroaction préférée (21), ladite deuxième indication de rétroaction (22) étant plus courte que ladite première indication, ladite deuxième indication comprenant au moins un indicateur d'un schéma de codage CQI préféré alternatif, le récepteur étant **caractérisé en ce que** la deuxième indication de rétroaction (22) comprend un indicateur d'un précodage alternatif, un nombre prédéfini de valeurs dudit indicateur relatif à un premier rang de transmission alternatif (TRmiddle) et un autre nombre prédéfini de valeurs dudit indicateur relatif à un deuxième rang de transmission alternatif (TRlow).

7. Émetteur (40) adapté pour effectuer un fonctionnement entrées multiples sorties multiples dans un réseau de radiocommunication, ledit émetteur (40) comprenant :
des moyens (41) pour recevoir une première indication ayant un format prédéfini, dans lequel ladite première indication est une indication de rétroaction préférée (21) représentant une option préférée par le récepteur, ladite première indication comprenant un indicateur d'un précodage PMI préféré qui est un traitement spatial consistant à appliquer une phase et/ou un gain ou des pondérations au signal émis par les antennes d'émission, un indicateur d'un schéma de codage CQI préféré, et au moins un indicateur correspondant à un rang de transmission représentant le nombre de signaux pouvant être envoyés simultanément en utilisant une transmission MIMO ;
- ledit émetteur comprenant en outre : des moyens (42) pour recevoir au moins une deuxième indication de rétroaction, dans lequel ladite deuxième indication de rétroaction (22) représente une option alternative pour le récepteur par rapport à ladite indication de rétroaction préférée (21), ladite deuxième indication de rétroaction (22) étant plus courte que ladite première indication, ladite deuxième indication comprenant au moins un indicateur d'un schéma de codage CQI préféré alternatif, l'émetteur étant **caractérisé en ce que** la deuxième indication de rétroaction (22) comprend un indicateur d'un précodage alternatif, un nombre prédéfini de valeurs dudit indicateur relatif à un premier rang de transmission alternatif (TRmiddle) et un autre nombre prédéfini de valeurs dudit indicateur relatif à un deuxième rang de transmission alternatif (TRlow).
